# EUROPÄISCHE PATENTSCHRIFT

(11) **EP 2 285 998 B1**
(45) Veröffentlichungstag und Bekanntmachung des Hinweises auf die Patenterteilung: **18.01.2012**
(21) Anmeldenummer: 09765797.7
(22) Anmeldetag: 12.06.2009
(51) Int. Cl.: C23C 4/06, C23C 4/12, C23C 30/00, F16J 9/00

(54) **VERFAHREN ZUR HERSTELLUNG EINES KOLBENS FÜR EINEN VERBRENNUNGSMOTOR SOWIE KOLBEN FÜR EINEN VERBRENNUNGSMOTOR**
METHOD FOR PRODUCING A PISTON FOR AN INTERNAL COMBUSTION ENGINE AND PISTON FOR AN INTERNAL COMBUSTION ENGINE
PROCÉDÉ DE FABRICATION D'UN PISTON POUR UN MOTEUR À COMBUSTION INTERNE ET PISTON POUR UN MOTEUR À COMBUSTION INTERNE

(30) Priorität: 20.06.2008 DE 102008002572
(43) Veröffentlichungstag der Anmeldung: 23.02.2011
(73) Patentinhaber: Federal-Mogul Nürnberg GmbH, 90441 Nürnberg (DE)
(72) Erfinder: KONRAD, Peter, 91257 Pegnitz (DE); BABERG, Arnd, 90513 Zirndorf (DE); MATZ, Marc-Manuel, 86316 Friedberg (DE); GÖDEL, Peter, 86495 Freienried (DE); TRÜBENBACH, Werner, 86573 Obergreisbach (DE)
(74) Vertreter: HOFFMANN EITLE
(86) Internationale Anmeldenummer: PCT/EP2009/057277
(87) Internationale Veröffentlichungsnummer: WO 2009/153217

(56) Entgegenhaltungen:
- EP-A2- 0 937 888
- WO-A1-2004/106721
- WO-A1-2007/039011
- DE-A1- 2 425 358
- DE-A1- 10 308 561

## Beschreibung

### Technisches Gebiet

Die Erfindung betrifft ein Verfahren zur Herstellung eines Kolbens für einen Verbrennungsmotor sowie einen derartigen Kolben.

Im Rahmen der Entwicklung von Motoren, die immer kleiner und leistungsfähiger werden, steigen die Druck- und Temperaturbelastungen auf die verwendeten Kolben. In diesem Zusammenhang ist insbesondere die oberste Ringnut, die dem Einsetzen eines Kolbenringes dient, besonders belastet. Ferner ist es ein Ziel im Rahmen der Motorentwicklung, das Schadraumvolumen zu minimieren, was eine Verringerung der Feuersteghöhe bedeutet.

### Stand der Technik

Die US 5,756,150 beschreibt einen Kolben, bei dem ein Kolbenrohling mit einer Nut verwendet wird, die größer ist als die am späteren Kolben vorgesehene Ringnut. Diese vergleichsweise große Nut wird mit zwei aufgesprühten Schichten gefüllt und nachfolgend wird die Ringnut herausgearbeitet.

Ein ähnliches Verfahren, das beispielsweise mit Hilfe einer Lichtbogenspritzpistole durchgeführt werden kann, wird in der DE 2 425 358 A beschrieben.

Die DE 32 46 630 A1 betrifft ein ebenfalls ähnliches Verfahren, bei dem eine Nut, die größer ist als die spätere Ringnut, mit einer siliziumhaltigen Aluminiumlegierung gefüllt wird.

Das Dokument WO2004/106721 betrifft ein Verfahren zum Herstellen einer Zylinderlaufbuchse für einen Verbrennungsmotor, wobei das Bauteil eine Haftvermittlerschicht und eine Verschleißschicht umfasst. Das Verfahren enthält den Einsatz eines thermischen Spritzverfahrens zum Aufbringen der Haftvermittlerschicht und der tribologischen Lauffläche. Das Dokument beschreibt die Herstellung einer neuen Lauffläche, aber es wird nicht ein konkreter Bereich offenbart.

### Darstellung der Erfindung

Der Erfindung liegt die Aufgabe zugrunde, ein Verfahren zur Herstellung eines Kolbens für einen Verbrennungsmotor zu schaffen, mit dem ein Kolben für einen Verbrennungsmotor hergestellt werden kann, der im Hinblick auf das Verschleißverhalten, insbesondere im Bereich der obersten Ringnut, verbessert ist. Ferner soll ein derartiger Kolben vorgestellt werden.

Die Lösung der oben genannten Aufgabe erfolgt zum einen durch das im Anspruch beschriebene Verfahren.

Demzufolge wird im Rahmen der Herstellung eines Kolbens zumindest der Bereich der obersten Ringnut zumindest teilweise ausgespart. Mit anderen Worten wird der Bereich der Ringnut entweder bereits bei der Herstellung eines Kolbenrohlings, beispielsweise beim Gießen, ausgespart, das heißt, es findet sich eine Ausnehmung oder dergleichen in dem Bereich, in dem später die oberste Ringnut auszubilden ist. Alternativ oder ergänzend hierzu kann bei dem Kolbenrohling der Bereich der obersten Ringnut ganz oder teilweise vorhanden sein, und es wird, beispielsweise spanende Bearbeitung, das Material des Kolbenrohlings im Bereich der späteren obersten Ringnut entfernt. Insbesondere ist die beschriebene Aussparung bevorzugt zumindest ein wenig größer als die spätere oberste Ringnut, so dass die nachfolgenden Schritte durchgeführt werden können.

Erfindungsgemäß wird nämlich anschließend eine Haftvermittlerschicht, die Aluminium enthält, aufgebracht. Für eine derartige Schicht hat sich herausgestellt, dass eine nachfolgend erfindungsgemäß thermisch aufgespritzte Verschleißschutzschicht eine besonders gute Verbindung zu dem Kolbenmaterial eingeht. Die beschriebene Haftvermittlerschicht kann durch sämtliche, vorangehend und nachfolgend, für die Verschleißschutzschicht angegebenen Verfahren zu deren Aufbringung aufgebracht werden. Aus der Verschleißschutzschicht wird nachfolgend zumindest die oberste Ringnut zumindest teilweise herausgearbeitet. Mit anderen Worten werden die Flanken und/oder der Grund der obersten Ringnut zumindest teilweise durch das Material der Verschleißschutzschicht gebildet, so dass die Nut, die im Verwendungszustand den obersten Kolbenring aufnimmt, den besonders hohen Flächenpressungen Stand hält, sowie der die Nut umgebende Bereich besonders gut den Anforderungen im Hinblick auf Druck- und Temperaturbelastung entspricht. Dies wird erfindungsgemäß durch die Haftvermittlerschicht unterstützt.

Im Rahmen der Aufbringung der Haftvermittler- und/oder der Verschleißschicht kann davon gesprochen werden, dass das Substratmaterial, also das Material des Kolbenrohlings durch einen Strahlprozess und/oder das thermische Aufspritzen des erwähnten Materials aktiviert wird. Mit anderen Worten wird das Substratmaterial aufgeraut. Dies kann durch ein Strahlverfahren (mit Festkörper oder Wasser) oder spanabhebende Verfahren, wie z.B. Drehen, durchgeführt werden, bei denen beispielsweise durch eine geometrische Schneide ein Profil mit Hinterschneidungen erzeugt wird. Nach dem Auftragen der erforderlichen Schichtdicke, kann, wie erwähnt, die oberste Ringnut zumindest teilweise aus dem aufgetragenen Material herausgearbeitet werden.

Insgesamt ergibt sich durch die Erfindung eine Verlängerung der Betriebsdauer sowohl des Kolbens als auch des in die oberste Ringnut eingesetzten Kolbenringes, und sowohl für Diesel- als auch Ottomotoren. Ferner entfällt durch die Erfindung in vorteilhafter Weise die Notwendigkeit, einen Ringträger einzugießen, was technisch ein aufwendiges Verfahren ist, so dass durch die Erfindung dieser Aufwand vermieden werden kann. Der Aufwand wird insbesondere dadurch minimiert, dass das manuelle Einlegen des Ringträgers in die Gießform entfällt, und dass der Ringträger als solcher nicht mehr zugekauft werden muss. Ferner können Lage- und Bindungsfehler, die beim Eingießen des Ringträgers auftreten können, vermieden werden. Darüber hinaus ist das Eingießen eines Ringträgers bei denjenigen Herstellungsverfahren, die vorteilhafter Weise für die Kolben von Ottomotoren verwendet werden, nämlich Druckguss- und Schmiedeverfahren, nicht durchführbar. Durch die Erfindung können somit diese Verfahren beibehalten werden, und die oberste Ringnut kann auch bei Ottomotorkolben besonders verschleißfest gestaltet werden. Die beschriebene Verschleißschutzschicht bildet somit in vorteilhafter Weise eine Ringnutarmierung.

Bevorzugte Weiterbildungen des erfindungsgemäßen Verfahrens sind in den weiteren Ansprüchen beschrieben.

Besondere Vorteile lassen sich erreichen, wenn ferner der Bereich des Feuerstegs zunächst zumindest teilweise ausgespart wird, und nach dem Auftragen der Verschleißschutzschicht fertig bearbeitet wird. Mit anderen Worten kann zusätzlich der Bereich des Feuerstegs zumindest teilweise bereits bei der Herstellung des Kolbenrohlings ausgespart, oder an dem Kolbenrohling entfernt werden. Durch das Aufbringen der Verschleißschutzschicht, auch im Bereich des Feuerstegs wird der spätere Feuersteg zumindest teilweise durch die Verschleißschutzschicht gebildet. Dies macht auch diesen Bereich besonders verschleißfest und ermöglicht in vorteilhafter Weise eine Reduzierung der Höhe des Feuerstegs, so dass das Schadraumvolumen minimiert werden kann. Hier zeigt sich ferner eine kombinierte Wirkung im Hinblick auf die Vermeidung eines Ringträgers. Ein Ringträger kann nämlich bei reduzierter Feuersteghöhe aus technischen Gründen nur begrenzt eingesetzt werden. Dadurch, dass durch das erfindungsgemäße Verfahren ein Ringträger vermieden werden kann, kann in vorteilhafter Weise die Feuersteghöhe verringert werden, ohne die Festigkeit des Bereichs der obersten Ringnut zu gefährden. Zu dem vorangehend beschriebenen, bevorzugten Verfahrensschritt, wonach ferner der Bereich des Feuerstegs zumindest teilweise ausgespart, und nach dem Auftragen der Verschleißschutzschicht fertig bearbeitet wird, sei erwähnt, dass dieser von den vorangehend beschriebenen Verfahrensschritten unabhängig ist, und auch alleine bei einem Verfahren zur Herstellung eines Kolbens eingesetzt werden kann. Jedoch kann dieser Verfahrensschritt mit allen vorangehend und nachfolgend beschriebenen Verfahrensschritten kombiniert werden.

Für die Haftvermittlerschicht hat es sich ferner als vorteilhaft erwiesen, dass diese ferner Silizium aufweist.

Für die Verschleißschutzschicht wurden besonders gute Eigenschaften festgestellt, wenn diese durch einen Stahl mit zumindest einem der folgenden Legierungselemente gebildet wird: Kohlenstoff mit einem Anteil von 0,1 bis 1,0 %, Chrom, Molybdän, Nickel. Durch sämtliche genannten Legierungselemente wird eine Härte der Verschleißschutzschicht erreicht, die größer ist als die des Grundmaterials des Kolbens, so dass die gewünschten Eigenschaften erreicht werden. Allgemein werden niedrig legierte Stähle, beispielsweise St08 mit einem Kohlenstoffgehalt von 0,1 bis 1,0 % bevorzugt, weil bei dem Auftragen durch thermisches Spritzen vergleichsweise hohe Spritzverluste auftreten. Diese sind im Hinblick auf die Kosten akzeptabel, wenn ein niedrig legierter Stahl verwendet wird. Ein derartiger Stahl ist vergleichweise kostengünstig. Als Beispiele seien FeCr, FeCrMo und FeCrNi genannt.

Ferner konnten für die Verschleißschutzschicht gute Eigenschaften festgestellt werden, wenn diese durch eine Kupfer- oder Nickelschicht, insbesondere NiCr oder eine hochlegierte Aluminiumschicht gebildet wurde.

Bei ersten Versuchen konnte festgestellt werden, dass sich die Verschleißschutzschicht besonders effizient durch APS (Atomosphärisches Plasmaspritzen), HVOF (High Velocity Oxygen Flame Spraying, Hochgeschwindigkeitsflammspritzen), Lichtbogendrahtspritzen oder Drahtflammspritzen auftragen lässt. Derzeit wird insbesondere das Lichtbogendrahtspritzen bevorzugt. Dieses Verfahren bietet aus Kostengründen, insbesondere im Hinblick auf das verwendbare Drahtmaterial und die Auftragsleistung, Vorteile und ist in ähnlicher Weise wie die oben genannte Bearbeitung des Feuerstegs von den vorangehend beschriebenen Verfahrensschritten unabhängig, kann jedoch mit diesen ebenso wie mit den nachfolgend beschriebenen Verfahrensschritten kombiniert werden. Eine Verschleißschutzschicht, nicht notwendigerweise kombiniert mit einer Haftvermittlerschicht, die durch Lichtbogendrahtspritzen aufgebracht wird, ist somit, mit oder ohne Kombination mit anderen Verfahrensschritten, als Gegenstand der Anmeldung anzusehen.

Im Rahmen des Lichtbogendrahtspritzens können ferner unterschiedliche Materialien miteinander kombiniert werden, indem zwei oder mehr unterschiedliche Drähte zugeführt werden. Bevorzugt wird derzeit ein Draht aus Aluminium, und ein weiterer Draht aus Eisen. Die beiden Elemente bilden in der hierdurch ausgebildeten Verschleißschutzschicht eine sogenannte Pseudolegierung. Gute Eigenschaften lassen sich für die Verschleißschutzschicht bereits dadurch erreichen, dass die beiden Drähte, wie derzeit bevorzugt wird, mit übereinstimmendem Vorschub zugeführt werden, so dass eine heterogene, aber gleichmäßige Mischung, beispielsweise aus Aluminium und Eisen, entsteht. Alternativ ist selbstverständlich eine reine Eisen- oder Aluminiumschicht denkbar.

Erfindungsgemäss wird der Vorschub zumindest eines Drahtes über die Zeit des Aufbringens der Verschleißschutzschicht variiert. Hierdurch kann die Konzentration zumindest eines der beteiligten Elemente über die Dicke der Verschleißschutzschicht, die mit fortschreitender Zeit anwächst, variiert werden. Weiterhin wird in den zu dem Kolbenrohling gerichteten Bereichen, Aluminium angereichert. Hierdurch wird der thermische Ausdehnungskoeffizient zum Grundwerkstoff des Kolbens, bei dem es sich üblicherweise um eine Aluminiumlegierung handelt, in vorteilhafter Weise kompensiert. Ergänzend hierzu wird Eisen in dem sogenannten Kern bzw. der späteren Nutoberfläche angereichert.

In vorteilhafter Weise kann das erfindungsgemäße Verfahren ergänzend dazu verwendet werden, einen Kühlkanal zumindest teilweise auszubilden, indem vor dem Aufbringen der Verschleißschutzschicht eine entfernbare Masse, beispielsweise eine Salzmasse in die Aussparung eingebracht wird, nachfolgend die Verschleißschutzschicht aufgebracht wird, und schließlich die entfernbare Masse entfernt wird, so dass ein Hohlraum verbleibt, der den Kühlkanal bildet. In vorteilhafter Weise weist die Verschleißschutzschicht eine hohe Oberflächenporosität auf, die bis zu 20 Volumenprozent beträgt, und kann somit als Ölrückhaltevolumen verwendet werden. Im Rahmen des erfindungsgemäßen Verfahrens kann somit auch das aufwendige Einlegen eines Salzkerns in die Gießform vermieden, und durch das einfachere Einbringen der entfernbaren Masse in die Aussparung ersetzt werden. Im Hinblick auf diese Weiterbildung des erfindungsgemäßen Verfahrens wird der Inhalt der DE 10 2005 047 035 A1 der Anmelderin vollumfänglich zum Gegenstand der vorliegenden Anmeldung gemacht.

Die Lösung der oben genannten Aufgabe erfolgt ferner durch den im Anspruch 10 beschriebenen Kolben. Dieser weist entsprechend dem vorangehend beschriebenen Herstellungsverfahren einen Grundwerkstoff, eine darauf zumindest bereichsweise aufgebrachte Haftvermittlerschicht mit Aluminium und eine thermisch aufgespritzte Verschleißschutzschicht auf, aus der zumindest die oberste Ringnut zumindest teilweise herausgearbeitet ist. Die bevorzugten Weiterbildungen des erfindungsgemäßen Kolbens entsprechen im Wesentlichen denjenigen Ausführungsformen, die durch die vorangehend beschriebenen Ausführungsformen des erfindungsgemäßen Verfahrens erzeugt werden können. Ferner wird für die Verschleißschutzschicht derzeit bevorzugt, dass sie eine Dicke von bis zu 10 mm aufweist.

### Kurze Beschreibung der Zeichnungen

Nachfolgend wird eine beispielhaft in den Figuren dargestellte Ausführungsform der Erfindung näher erläutert. Es zeigen:
- Fig. 1: einen Querschnitt durch den erfindungsgemäßen Kolben vor dem Aufbringen einer Verschleißschutzschicht;
- Fig. 2: einen Querschnitt durch den erfindungsgemäßen Kolben beim Aufbringen einer Verschleißschutzschicht;
- Fig. 3: einen Querschnitt durch den erfindungemäßen Kolben mit aufgebrachter Verschleißschutzschicht; und

- Fig. 4: den im Bereich der obersten Ringnut und des Feuerstegs fertig bearbeiteten Kolben.

### Ausführliche Beschreibung eines bevorzugten Ausführungsbeispiels

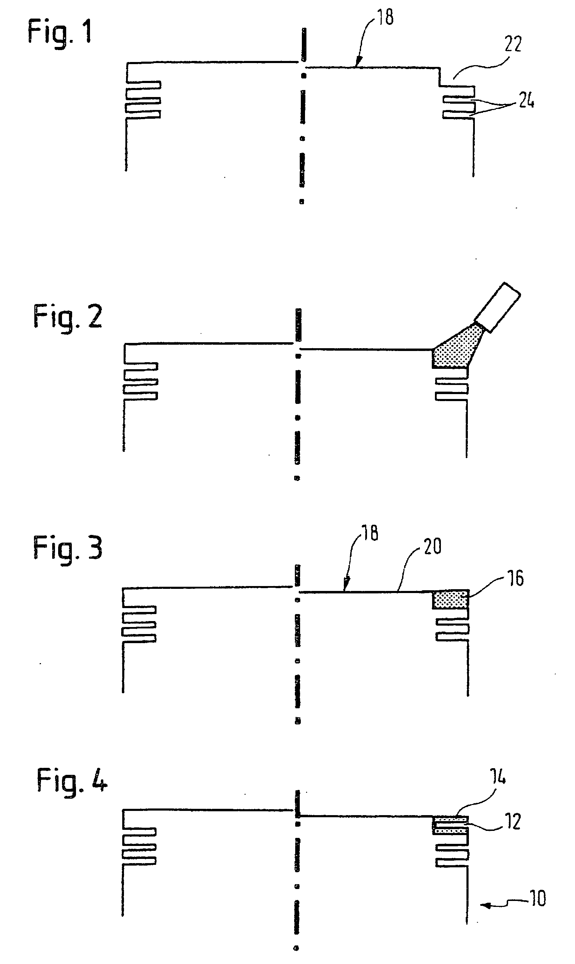

Wie in Fig. 1 zu erkennen ist, weist der im rechten Bereich dargestellte Kolbenrohling 18 im Bereich der obersten Ringnut und des Feuerstegs eine Aussparung 22 auf. Zum Vergleich ist in sämtlichen Figuren im linken Bereich jeweils ein herkömmlicher Kolben gezeigt. Unterhalb der beschriebenen Aussparung 22, die bei dem erfindungsgemäßen Kolben der Ausbildung der obersten Ringnut und des Feuerstegs dient, sind weitere Ringnuten 24 dargestellt.

Wie in Fig. 2 schematisch gezeigt, wird die Aussparung 22 bei dem gezeigten Ausführungsbeispiel weitgehend vollständig zunächst mit einer Haftvermittlerschicht und nachfolgend mit einer Verschleißschutzschicht gefüllt.

In Fig. 3 ist die Verschleißschutzschicht zu erkennen und mit 16 bezeichnet. Diese ist somit auf den Grundwerkstoff 20 des Kolbenrohlings 18 aufgebracht, und hieraus kann nachfolgend die oberste Ringnut 12 (vgl. Fig. 4) herausgearbeitet werden.

Wie in Fig. 4 erkennbar ist, werden bei der gezeigten Ausführungsform beide Flanken der obersten Ringnut 12 durch das besonders verschleißfeste Material der Verschleißschutzschicht 16 gebildet. Ferner bildet die Verschleißschutzschicht 16 den Feuersteg 14, so dass dieser im Hinblick auf seine Höhe reduziert werden kann. Dies zeigt ein Vergleich mit dem linken Bereich der Fig. 4.

## Patentansprüche

1. Verfahren zur Herstellung eines Kolbens (10) für einen Verbrennungsmotor, bei dem zumindest der Bereich der obersten Ringnut (12) zumindest teilweise ausgespart wird, anschließend eine Haftvermittlerschicht mit Aluminium aufgebracht wird, danach eine Verschleißschutzschicht (16) thermisch aufgespritzt wird, wobei die Verschleißschutzschicht mittels Lichtbogendrahtspritzen aufgebracht wird, bei dem zwei unterschiedliche Drähte zugeführt werden, wobei der Vorschub zumindest eines Drahtes über die Zeit des Aufbringens der Verschleißschutzschicht variiert wird, und wobei im Kern Eisen und in den zu dem Kolbenrohling gerichteten Bereichen Aluminium angereichert wird, und daraus zumindest die oberste Ringnut (12) zumindest teilweise herausgearbeitet wird.

2. Verfahren nach Anspruch 1, **dadurch gekennzeichnet, dass** ferner der Bereich des Feuerstegs (14) zumindest teilweise ausgespart, und nach dem Auftragen der Verschleißschutzschicht (16) fertig bearbeitet wird.

3. Verfahren nach Anspruch 1 oder 2, **dadurch gekennzeichnet, dass** die Haftvermittlerschicht ferner Silizium aufweist.

4. Verfahren nach einem der vorangehenden Ansprüche,
**dadurch gekennzeichnet, dass** die Verschleißschutzschicht (16) zumindest teilweise ein Stahl mit zumindest einem der folgenden Legierungselemente ist: Kohlenstoff mit einem Anteil von 0,1 - 1 %, Chrom, Molybdän, Nickel.

5. Verfahren nach einem der Ansprüche 1 - 3, **dadurch gekennzeichnet, dass** die Verschleißschutzschicht zumindest teilweise eine Kupfer- oder Nickelschicht, insbesondere NiCr, oder eine hochlegierte Aluminiumschicht ist.

6. Verfahren nach einem der vorangehenden Ansprüche,
**dadurch gekennzeichnet, dass** beim Lichtbogendrahtspritzen ein Draht aus Aluminium und ein Draht aus Eisen zugeführt werden.

7. Verfahren nach einem der vorangehenden Ansprüche,
**dadurch gekennzeichnet, dass** vor dem Aufbringen der Verschleißschutzschicht eine entfernbare Masse in die Aussparung eingebracht wird, die nach dem Aufbringen der Verschleißschutzschicht entfernt wird, so dass der entstehende Hohlraum einen Kühlkanal bildet.

8. Kolben (10) für einen Verbrennungsmotor mit einem Grundwerkstoff (20), einer darauf zumindest bereichweise aufgebrachten Haftvermittlerschicht mit Aluminium und einer thermisch aufgespritzten Verschleißschutzschicht (16), in der die Konzentration zumindest eines Bestandteils über die Dicke variiert, und im Kern Eisen und in den zu dem Kolbenrohling gerichteten Bereichen Aluminium angereichert ist, und aus der zumindest die oberste Ringnut (12) zumindest teilweise herausgearbeitet ist.

9. Kolben nach Anspruch 8, **dadurch gekennzeichnet, dass** ferner der Feuersteg (14) zumindest teilweise durch die Verschleißschutzschicht gebildet wird.

10. Kolben nach einem der Ansprüche 8 oder 9, **dadurch gekennzeichnet, dass** die Haftvermittlerschicht ferner Silizium aufweist.

11. Kolben nach einem der Ansprüche 8 - 10, **dadurch gekennzeichnet, dass** die Verschleißschutzschicht (16) zumindest teilweise ein Stahl mit zumindest einem der folgenden Legierungselemente ist: Kohlenstoff mit einem Anteil von 0,1 - 1 %, Chrom, Molybdän, Nickel.

12. Kolben nach einem der Ansprüche 8 - 10, **dadurch gekennzeichnet, dass** die Verschleißschutzschicht zumindest teilweise eine Kupfer- oder Nickelschicht, insbesondere NiCr oder eine hochlegierte Aluminiumschicht ist.

13. Kolben nach einem der Ansprüche 8 - 12, **dadurch gekennzeichnet, dass** die Verschleißschutzschicht eine Dicke von bis zu 10 mm aufweist.

14. Kolben nach einem der Ansprüche 8 - 13, **dadurch gekennzeichnet, dass** dieser ferner einen Kühlkanal aufweist, dessen Innenfläche zumindest teilweise durch die Verschleißschutzschicht (16) gebildet wird.

## Claims

1. Method for the manufacture of a piston (10) for an internal combustion engine, in which at least the region of the top annular groove (12) is at least partially recessed, next an adhesion-promoting layer with aluminium is applied, then a wear-preventing layer (16) is sprayed on thermally, the wear-preventing layer being applied by wire arc spraying in which two different wires are supplied, wherein the feed rate of at least one wire is varied over the time of applying the wear-preventing layer, and wherein aluminium is enriched in the core iron and in the regions facing the piston blank, and from this at least the top annular groove (12) is at least partially hollowed out.

2. Method according to claim 1, **characterised in that** furthermore the region of the top land (14) is at least partially recessed, and finished after application of the wear-preventing layer (16).

3. Method according to claim 1 or 2, **characterised in that** the adhesion-promoting layer further comprises silicon.

4. Method according to any of the preceding claims, **characterised in that** the wear-preventing layer (16) is at least partially a steel having at least one of the following alloying elements: carbon with a proportion of 0.1 - 1 %, chromium, molybdenum, nickel.

5. Method according to any of claims 1 - 3, **characterised in that** the wear-preventing layer is at least partially a copper or nickel layer, in particular NiCr, or a highly alloyed aluminium layer.

6. Method according to any of the preceding claims, **characterised in that** during wire arc spraying a wire made of aluminium and a wire made of iron are supplied.

7. Method according to any of the preceding claims, **characterised in that**, before application of the wear-preventing layer, a removable composition is introduced into the recess and removed after application of the wear-preventing layer, so that the cavity produced forms a cooling channel.

8. Piston (10) for an internal combustion engine having a base material (20), an adhesion-promoting layer with aluminium which is applied thereto in at least one region, and a wear-preventing layer (16) which is sprayed on thermally and in which the concentration of at least one component varies over the thickness, and aluminium is enriched in the core iron and in the regions facing the piston blank, and from which at least the top annular groove (12) is at least partially hollowed out.

9. Piston according to claim 8, **characterised in that** furthermore the top land (14) is at least partially formed by the wear-preventing layer.

10. Piston according to either of claims 8 or 9, **characterised in that** the adhesion-preventing layer further comprises silicon.

11. Piston according to any of claims 8 - 10, **characterised in that** the wear-preventing layer (16) is at least partially a steel having at least one of the following alloying elements: carbon with a proportion of 0.1 - 1 %, chromium, molybdenum, nickel.

12. Piston according to any of claims 8 - 10, **characterised in that** the wear-preventing layer is at least partially a copper or nickel layer, in particular NiCr, or a highly alloyed aluminium layer.

13. Piston according to any of claims 8 - 12, **characterised in that** the wear-preventing layer has a thickness of up to 10 mm.

14. Piston according to any of claims 8 - 13, **characterised in that** it further has a cooling channel of which the inner surface is at least partially formed by the wear-preventing layer (16).

## Revendications

1. Procédé de fabrication d'un piston (10) pour un moteur à combustion interne, dans lequel au moins la zone de la gorge à segment la plus haute (12) est au moins partiellement évidée, une couche d'agent d'adhérence, avec de l'aluminium, étant appliquée ensuite, une couche de protection contre l'usure (16) étant ensuite appliquée par voie thermique, la couche de protection contre l'usure étant appliquée par projection à arc électrique utilisant plusieurs fils, dans laquelle deux fils différents sont amenés, l'avancement d'au moins un fil étant modifié sur la durée de l'application de la couche de protection contre l'usure, et, dans le noyau, du fer et, dans les zones tournées vers l'ébauche de piston, de l'aluminium étant apportés en enrichissement et, à partir de cela, au moins la gorge à segment la plus haute (12) étant au moins partiellement creusée par usinage.

2. Procédé selon la revendication 1, **caractérisé en ce que**, en outre, la zone de la couronne de piston (14) est au moins partiellement évidée, son usinage étant achevé après application de la couche de protection contre l'usure (16).

3. Procédé selon la revendication 1 ou 2, **caractérisé en ce que** la couche d'agent d'adhérence présente en outre du silicium.

4. Procédé selon l'une des revendications précédentes, **caractérisé en ce que** la couche de protection contre l'usure (16) est au moins partiellement un acier avec au moins l'un des éléments d'alliage suivants : carbone en une proportion dans la fourchette comprise entre 0,1 et 1 %, chrome, molybdène, nickel.

5. Procédé selon l'une des revendications 1 à 3, **caractérisé en ce que** la couche de protection contre l'usure est au moins partiellement une couche en cuivre ou en nickel, en particulier en NiCr, ou une couche d'aluminium fortement alliée.

6. Procédé selon l'une des revendications précédentes, **caractérisé en ce qu'**un fil en aluminium et un fil en fer sont amenés lors de la projection à arc électrique utilisant plusieurs fils.

7. Procédé selon l'une des revendications précédentes, **caractérisé en ce que**, avant l'application de la couche de protection contre l'usure, une masse amovible est introduite dans l'évidement, enlevée après application de la couche de protection contre l'usure, de manière que l'espace creux apparaissant forme un canal de refroidissement.

8. Piston (10) pour un moteur à combustion interne, avec un matériau de base (20), une couche d'agent d'adhérence appliquée sur lui au moins par zones, avec de l'aluminium et une couche de protection contre l'usure (16) appliquée par voie thermique, dans laquelle la concentration d'au moins un composant est modifiée sur la valeur de l'épaisseur, et, dans le noyau, du fer et, dans les zones tournées vers l'ébauche de piston, de l'aluminium étant apportés en enrichissement et, à partir de cela, au moins la gorge à segment la plus haute (12) étant au moins partiellement creusée par usinage.

9. Piston selon la revendication 8, **caractérisé en ce que**, en outre, la couronne de piston (14) est formée au moins partiellement par la couche de protection contre l'usure.

10. Piston selon l'une des revendications 8 ou 9, **caractérisé en ce que** la couche d'agent d'adhérence présente en outre du silicium.

11. Piston selon l'une des revendications 8 à 10, **caractérisé en ce que** la couche de protection contre l'usure (16) est au moins partiellement un acier avec au moins l'un des éléments d'alliage suivants : carbone en une proportion dans la fourchette comprise entre 0,1 et 1 %, chrome, molybdène, nickel.

12. Piston selon l'une des revendications 8 à 10, **caractérisé en ce que** la couche de protection contre l'usure est au moins partiellement une couche en cuivre ou en nickel, en particulier en NiCr, ou une couche d'aluminium fortement alliée.

13. Piston selon l'une des revendications 8 à 12, **caractérisé en ce que** la couche de protection contre l'usure présente une épaisseur allant jusqu'à 10 mm.

14. Piston selon l'une des revendications 8 à 13, **caractérisé en ce que** celui-ci présente en outre un canal de refroidissement, dont la surface intérieure est formée au moins partiellement par la couche de protection contre l'usure (16).
